# DEMANDE DE BREVET EUROPEEN

(11) **EP 4 570 136 A1**
(43) Date de publication de la demande: **18.06.2025**
(21) Numéro de dépôt: 24218592.4
(22) Date de dépôt: 10.12.2024
(51) Int. Cl.: A47J 27/04, A47J 27/08, A47J 36/06, A47J 37/06

(54) **APPAREIL ÉLECTRIQUE DE PRÉPARATION CULINAIRE**

(30) Priorité: 11.12.2023 FR 2313952
(71) Demandeur: SEB S.A., 69130 Ecully (FR)
(72) Inventeur: DUMOUX, Philippe, 69134 ECULLY CEDEX (FR); TURPIN, Romain, 69134 ECULLY CEDEX (FR); PRIETO, Guillaume, 69134 ECULLY CEDEX (FR); PETITALLOT, Johann, 69134 ECULLY CEDEX (FR); SEURAT, Frédéric, Denis, 69134 ECULLY CEDEX (FR)
(74) Mandataire: SEB Développement

(57) **Abrégé**

Appareil de préparation culinaire comprenant :
- un couvercle principal (20), mobile entre une position ouverte et une position fermée,
- un couvercle intérieur (23), amovible et agencé pour être accouplé avec le couvercle principal (20),

l'appareil de préparation culinaire étant agencé pour proposer au moins un premier mode de cuisson dans lequel le couvercle intérieur (23) est accouplé au couvercle principal (20), et au moins un deuxième mode de cuisson dans lequel le couvercle intérieur (23) est retiré du couvercle principal (20),
caractérisé en ce que l'appareil de préparation culinaire comprend des moyens d'obturation (22), mobiles entre :
- une position escamotée, occupée lors du premier mode de cuisson,
- une position déployée, occupée lors du deuxième mode de cuisson et dans laquelle les moyens d'obturation (22) sont agencés pour obturer un passage laissé libre par le couvercle intérieur (23) retiré du couvercle principal (20).

## Description

### Domaine technique de l'invention

La présente invention concerne de manière générale un appareil de préparation culinaire, et en particulier, l'invention concerne un appareil de préparation culinaire prévu pour proposer au moins un mode de cuisson sous pression et au moins un mode de cuisson par convection.

### État de la technique

Il est connu dans l'art antérieur des appareils de préparation culinaire des appareils proposant plusieurs modes de cuisson, notamment au moins un mode de cuisson sous pression et au moins un mode de cuisson par convection. La proposition de ces deux modes de cuisson sur un même appareil nécessite typiquement l'utilisation d'un couvercle intérieur amovible pour étanchéifier l'espace de cuisson (la cuve de cuisson) de l'appareil de préparation culinaire pendant le mode de cuisson sous pression, et le retrait de ce couvercle intérieur rend possible le mode de cuisson par convection afin de laisser circuler le flux d'air chaud nécessaire. En contrepartie, une fois le couvercle intérieur retiré, un passage est formé entre le couvercle principal et la cuve ou le boitier. Ainsi, un tel appareil de préparation culinaire peut présenter des fuites de vapeur ou d'air chaud entre le couvercle principal et le boîtier ou la cuve, notamment au niveau des poignées de la cuve de cuisson. De telles fuites peuvent rendre les poignées trop chaudes pour être saisies confortablement et/ou sans risque par l'utilisateur pendant ou peu après la cuisson.

### Exposé de l'invention

Un but de la présente invention est de répondre aux inconvénients de l'art antérieur mentionnés ci-dessus et en particulier, tout d'abord, de proposer un appareil de préparation culinaire prévu pour proposer au moins un mode de cuisson sous pression et au moins un mode de cuisson par convection et dont le fonctionnement et/ou l'utilisation ne présente pas de risque d'inconfort et/ou de risque de brûlure.

Pour cela un premier aspect de l'invention concerne un appareil de préparation culinaire comprenant au moins :
- un boîtier, comprenant un logement recevant une cuve de cuisson et définissant un espace de cuisson,
- un couvercle principal, mobile entre une position ouverte permettant l'accès à l'espace de cuisson et une position fermée interdisant l'accès à l'espace de cuisson,
- un couvercle intérieur, amovible et agencé pour être accouplé avec le couvercle principal de sorte à venir en appui de manière étanche sur un bord du boîtier et/ou de la cuve de cuisson lorsque le couvercle principal est en position fermée,
   l'appareil de préparation culinaire étant agencé pour proposer au moins un premier mode de cuisson dans lequel le couvercle intérieur est accouplé au couvercle principal, et au moins un deuxième mode de cuisson dans lequel le couvercle intérieur est retiré du couvercle principal,
   caractérisé en ce que l'appareil de préparation culinaire comprend des moyens d'obturation, mobiles entre :
      - une position escamotée, occupée lors du premier mode de cuisson, pour permettre le montage du couvercle intérieur,
      - une position déployée, occupée lors du deuxième mode de cuisson et dans laquelle les moyens d'obturation sont agencés pour obturer au moins partiellement un passage entre l'espace de cuisson et l'extérieur de l'appareil de préparation culinaire, laissé libre par le couvercle intérieur retiré du couvercle principal.

Selon la mise en oeuvre ci-dessus, l'appareil de préparation culinaire comprend des moyens d'obturation qui peuvent occuper une position déployée (ou une position d'obturation) en l'absence du couvercle intérieur. En laissant ainsi les moyens d'obturation prendre au moins en partie la place du couvercle intérieur, les moyens d'obturation forment un écran ou un barrage aux flux d'air chauds ou de vapeur au passage formé entre le couvercle principal et la cuve ou le boitier à la suite du retrait du couvercle intérieur, pour éviter les fuites entre le couvercle principal et le boîtier ou la cuve de cuisson. Autrement dit, les moyens d'obturation limitent localement les échanges fluidiques entre l'extérieur et l'espace de cuisson par ledit passage formé entre le couvercle principal et la cuve ou le boitier, indépendamment de la présence du couvercle intérieur. En conséquence, la périphérie externe du couvercle principal (typiquement les poignées éventuelles de boîtier ou de cuve de cuisson) n'est pas exposée aux fuites d'air ou de vapeur chauds même lors du mode de cuisson par convection, si bien que l'utilisateur peut manipuler l'appareil et/ou les poignées en tout confort et en toute sécurité.

L'appareil de préparation culinaire peut en outre présenter une ou plusieurs des caractéristiques suivantes, prises seules ou en combinaison.

Selon un mode de réalisation, le passage est agencé entre le couvercle principal d'une part, et le boîtier et/ou la cuve de cuisson d'autre part. Le passage auquel il est fait référence est celui qui, dans la majorité des appareils de préparation culinaire, débouche en périphérie du couvercle principal et donc sur des poignées de l'appareil sur le boîtier, et/ou sur les poignées de la cuve. Les moyens d'obturation obturent donc une surface en périphérie du couvercle principal, entre le couvercle principal et la cuve de cuisson ou le boîtier, et interdisent la sortie des vapeurs de la cuve de cuisson vers les poignées de boîtier et/ou vers les poignées de la cuve. Les poignées conservent donc une température modérée relativement à une température susceptible de présenter un risque de brûlure lors d'un contact.

Selon un mode de réalisation, le couvercle principal comprend des moyens de ventilation et des moyens de chauffage, et le deuxième mode de cuisson comprend au moins une étape de cuisson par convection. Ce deuxième mode de cuisson, par la génération d'un flux de chaleur dirigé sur les aliments par les moyens de chauffage couplés aux moyens de ventilation, crée typiquement un flux de gaz chauds (air chaud et vapeur issue des aliments à cuire). Lors du deuxième mode de cuisson, qui met en oeuvre une recirculation et/ou une évacuation pour le flux de gaz chauds (air chaud et vapeur), il est nécessaire que les moyens de chauffage et les moyens de ventilation puissent communiquer avec la cuve de cuisson. Le couvercle intérieur est donc incompatible avec ce deuxième mode de cuisson et doit être retiré de l'appareil de préparation culinaire. Le déploiement des moyens d'obturation avant le démarrage de ce mode de cuisson par convection permet de procurer un écran pour limiter les fuites du flux gazeux chaud, issu des flux d'air et de vapeur précédemment cités, vers les poignées. Les moyens d'obturation peuvent aussi protéger des infiltrations de flux gazeux le couvercle principal, sa structure interne (typiquement délimitée par des parois assemblées entre elles), et par exemple les moyens de ventilation (comprenant typiquement un moteur d'entraînement) et les moyens de chauffage.

Selon un mode de réalisation, l'appareil de préparation culinaire comprend au moins un évent agencé pour évacuer un flux gazeux généré dans l'espace de cuisson lors du deuxième mode de cuisson. Le passage obturé par les moyens d'obturation n'empêche ainsi pas l'évacuation du flux gazeux de la cuve de cuisson, qui est dirigé vers l'évent spécialement conçu, agencé et dédié à l'évacuation des gaz chauds de cuisson (vapeur, air chaud).

Selon un mode de réalisation, l'au moins un évent est agencé sur le couvercle principal et est rendu inopérant par le couvercle intérieur dans le premier mode de cuisson. En effet, lors du premier mode de cuisson, l'espace de cuisson est rendu étanche, et l'évent de sert plus à évacuer les gaz chauds directement depuis l'espace de cuisson. Par contre, l'évent peut être occupé et/ou utilisé par des moyens de régulation de pression (comme par exemple une soupape de régulation de pression) typiquement embarqués sur le couvercle intérieur.

Selon un mode de réalisation, le premier mode de cuisson comprend au moins une étape de cuisson sous pression. La cuisson sous pression est rendue possible en rendant l'espace de cuisson étanche, une contrainte qui est typiquement incompatible avec d'autres modes de cuisson, comme une cuisson par convection et/ou vapeur. Pour cette raison, le couvercle intérieur est ajouté (de manière amovible) au couvercle principal lors du mode de cuisson sous pression, afin de rendre l'espace de cuisson suffisamment hermétique à l'environnement extérieur pour effectuer une cuisson sous pression. Le couvercle intérieur, formant un écran au-dessus de l'espace de cuisson, peut aussi servir à protéger le couvercle principal, les moyens de chauffage et/ou les moyens de ventilation de ventilation durant certains modes de cuisson particulièrement salissants.

Selon un mode de réalisation, l'appareil de préparation culinaire comprend des moyens de rappel automatique par gravité agencés pour déplacer les moyens d'obturation par gravité au moins de la position escamotée à la position déployée, de manière à automatiser de manière simple le déplacement des moyens d'obturation. Les opérations effectuées sur le couvercle intérieur adaptent automatiquement la position des moyens d'obturation : l'utilisateur n'a pas à manipuler les moyens d'obturation lorsqu'il change de mode de cuisson. Particulièrement, pour passer les moyens d'obturation de la position déployée à la position escamotée, l'utilisateur (en installant le couvercle intérieur) pousse simplement sur les moyens d'obturation avec le couvercle intérieur pour que le couvercle intérieur prenne, en périphérie de couvercle principal, la place des moyens d'obturation. Lors du deuxième mode de cuisson (avec le couvercle intérieur retiré), les moyens d'obturation, sous l'effet de leur propre poids passent de la position escamotée à la position déployée lors de la fermeture du couvercle principal.

Selon un mode de réalisation, les moyens de rappel automatique comprennent des moyens de rappel élastique agencés pour déplacer les moyens d'obturation au moins de la position escamotée à la position déployée. Il peut s'agir d'un ou de plusieurs ressorts, comprimés entre le couvercle principal et les moyens d'obturation lorsque les moyens d'obturation sont dans une position escamotée, et prévus pour entraîner ou pousser les moyens d'obturation dans la position déployée en se détendant en l'absence de couvercle intérieur.

Selon un mode de réalisation, l'appareil de préparation culinaire comprend des moyens de rappel manuel agencés pour permettre à un utilisateur de déplacer les moyens d'obturation. Il peut s'agir d'un levier et/ou d'une manette et/ou d'une poignée, relié à la bague d'étanchéité et dont une interface de commande est positionnée à l'extérieur du couvercle principal, de sorte à permettre à un utilisateur de commander un déplacement des moyens d'obturation, au moins vers la position déployée.

Selon un mode de réalisation, les moyens de rappel automatiques sont constitués par des moyens de rappel par gravité. Ainsi, dans un mode de réalisation préféré, les moyens d'obturation se déplacent uniquement sous la force de leur propre poids pour passer de leur position escamotée à leur position déployée.

Selon un mode de réalisation, les moyens d'obturation comprennent une bague d'étanchéité. Une telle bague peut s'étendre sur toute la périphérie (c'est-à-dire sur 360°) de l'espace de cuisson, et/ou de la cuve de cuisson, et ou du logement du boîtier et/ou du couvercle principal.

Selon un mode de réalisation, les moyens d'obturation en position déployée touchent, ou entrent en contact avec, la cuve de cuisson et/ou le boîtier. Selon un mode de réalisation, les moyens d'obturation en position déployée laissent un passage ou un jeu inférieur à 1 mm, de préférence inférieur à 0.5 mm entre la cuve de cuisson et/ou le boîtier et les moyens d'obturation. Bien entendu, selon ces caractéristiques, le couvercle principal est en position fermée.

Selon un mode de réalisation, la bague d'étanchéité comprend un joint déformable, afin d'assurer au moins partiellement une étanchéité avec l'extérieur de la cuve de cuisson. On peut prévoir une lèvre déformable, un joint fermé, un joint creux.

Selon un mode de réalisation, la bague d'étanchéité est agencée pour épouser le boîtier et/ou la cuve de cuisson, en particulier lors du deuxième mode de cuisson, afin de minimiser la taille et/ou le nombre d'ouvertures entre le couvercle principal et la cuve de cuisson, susceptibles de créer des fuites lors de la cuisson.

Selon un mode de réalisation, les moyens d'obturation comprennent des moyens de guidage sur le couvercle principal. Les moyens de guidage assurent aux moyens d'obturation mobiles une trajectoire déterminée durant leurs déplacements. Les moyens de guidage assurent également un déplacement libre des moyens d'obturation, sans gêne ni frottements contre la carcasse de couvercle principal qui pourraient perturber le mouvement des moyens d'obturation.

Selon un mode de réalisation, les moyens de guidage comprennent une pluralité de glissières, de préférence trois glissières. Les moyens d'obturation se déplacent donc selon une trajectoire rectiligne par rapport au couvercle principal.

Selon un mode de réalisation, l'appareil de préparation culinaire comprend des moyens de détection de la position déployée des moyens d'obturation, pour autoriser le deuxième mode de cuisson. Ainsi, les risques de brûlure causées par les fuites de flux gazeux chaud sont minimisés.

Selon un mode de réalisation, l'appareil de préparation culinaire comprend une unité de commande reliée aux moyens de détection et prévue pour commander le premier mode de cuisson et/ou le deuxième mode de cuisson.

Selon un mode de réalisation, le couvercle intérieur comprend une soupape de régulation de pression, et/ou un moyen de sécurité à l'ouverture/fermeture constitué par un système de tige manométrique du type doigt d'Aroma, et/ou une soupape de sécurité.

Selon un mode de réalisation, l'appareil de préparation culinaire est électrique.

### Description des figures

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
[fig. 1] représente une vue générale de l'appareil de préparation culinaire comprenant un boîtier et un couvercle principal en position fermée pour interdire un accès à un espace de cuisson de l'appareil de préparation culinaire, l'appareil de préparation étant prévu pour proposer au moins un mode de cuisson sous pression et au moins un mode de cuisson par convection ;
[fig. 2] représente une vue de dessous du couvercle principal de la figure 1 pour montrer des moyens d'obturation prévus pour épouser une cuve de travail ou le boîtier lors d'un mode de cuisson par convection ;
[fig. 3] représente un détail d'une vue en coupe de l'appareil de préparation culinaire de la figure 1, avec les moyens d'obturation dans une position déployée pour permettre le mode de cuisson par convection ;
[fig. 4] représente un détail d'une vue en coupe de l'appareil de préparation culinaire de la figure 1, dont les moyens d'obturation sont dans une position escamotée en raison de l'installation d'un couvercle intérieur pour permettre un mode de cuisson avec une étape de cuisson sous pression ;
[fig. 5] représente une vue d'une carcasse du couvercle principal avec les moyens d'obturation dans la position escamotée;
[fig. 6] représente la vue de la figure 4 pour montrer une mise en oeuvre de réalisation selon une première alternative en ce qui concerne des moyens de rappel des moyens d'obturation, les moyens d'obturation étant dans la position escamotée ;
[fig. 7] représente l'appareil de préparation culinaire de la figure 6, avec les moyens d'obturation dans la position déployée ;
[fig. 8] représente une mise en oeuvre alternative des moyens d'obturation de la figure 3 ou 4, en position déployée ;
[fig. 9] représente les moyens d'obturation de la figure 8, en position escamotée.

### Description détaillée de mode(s) de réalisation

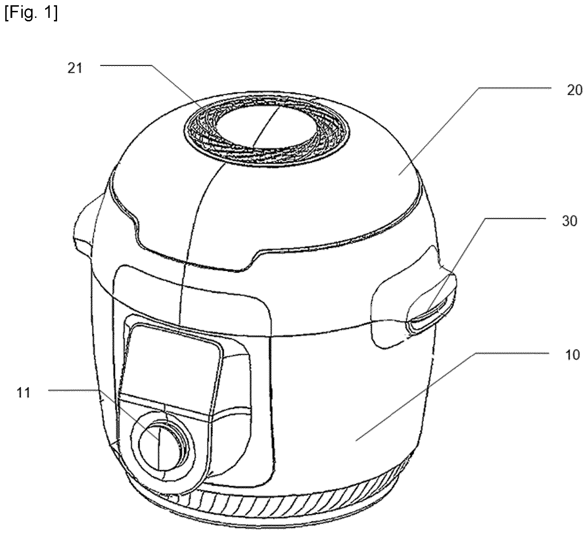

La figure 1 représente un appareil de préparation culinaire électrique comprenant notamment un boîtier 10 et un couvercle principal 20 prévu pour fermer le boîtier 10. L'appareil de préparation culinaire est agencé pour pouvoir conduire plusieurs modes de cuisson, dont au moins un mode de cuisson sous pression et au moins un mode de cuisson par convection.

A cet effet, l'appareil de préparation culinaire comprend une interface de sélection 11 pour permettre à l'utilisateur de sélectionner le mode de cuisson de son choix. L'interface de sélection 11 peut avoir la forme d'un ou plusieurs boutons et/ou d'une interface tactile, et/ou d'une molette.

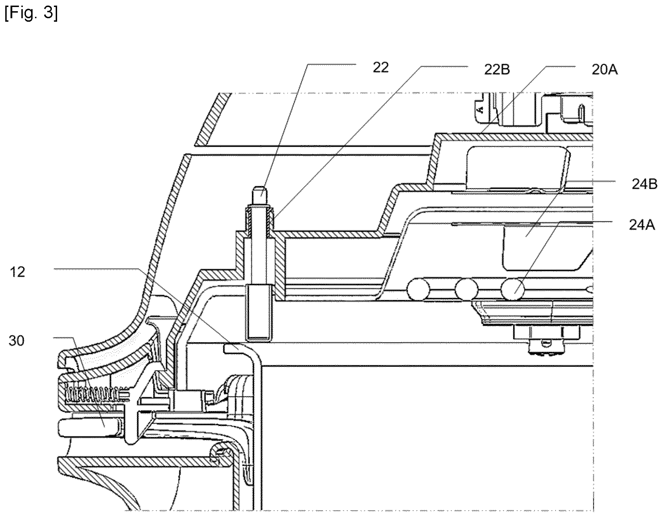

Deux poignées 30 (visibles entre le boîtier 10 et le couvercle principal 20) sont solidaires d'une cuve de cuisson 12 (visible à partir de la figure 3) reçue dans un logement du boîtier 10 et prévue pour recevoir les aliments à cuire, et pour créer un espace de cuisson en étant placée dans le boîtier 10 lors de la cuisson. Un évent 21 agencé sur la couvercle principal 20 permet d'évacuer des vapeurs de cuisson et/ou un flux d'air chaud généré lors de certaines cuissons.

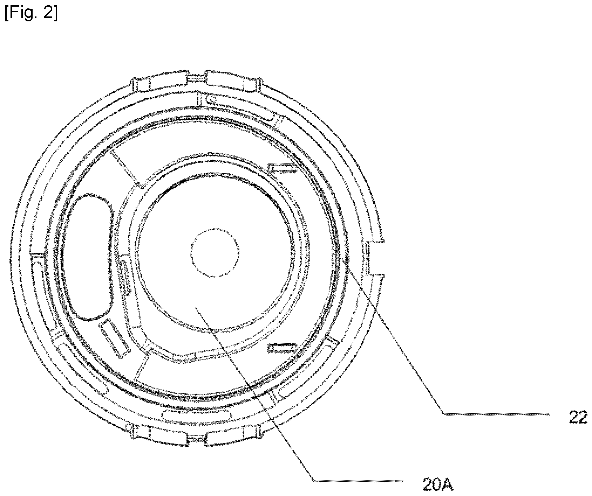

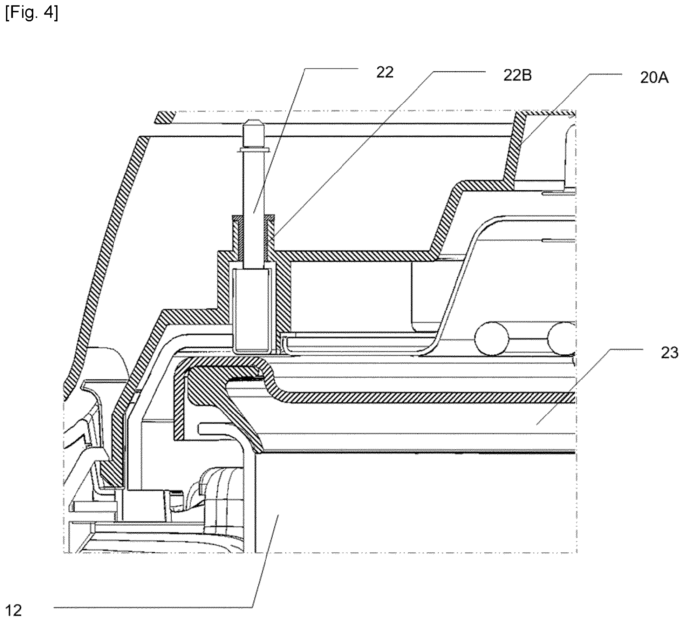

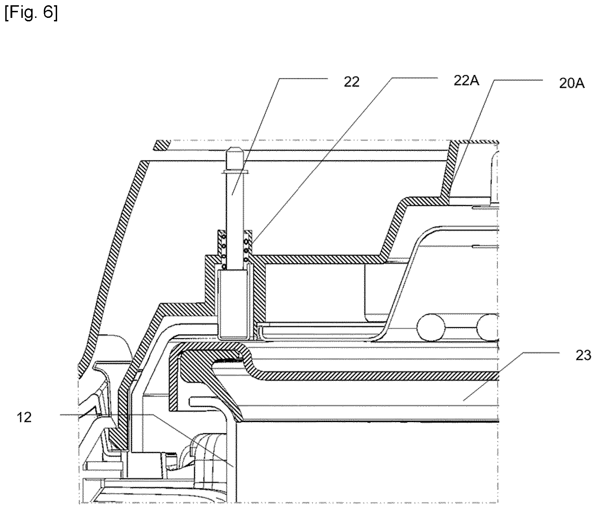

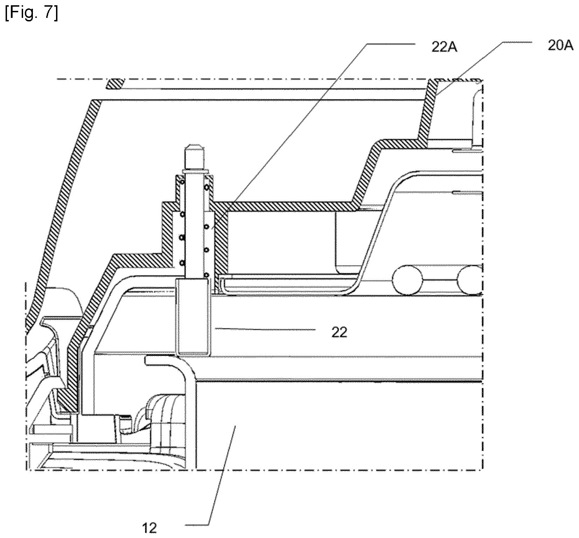

La figure 2 représente une vue de dessous du couvercle principal 20 et en particulier une vue de dessous d'une carcasse 20A du couvercle principal 20. Des moyens d'obturation 22 sont agencés dans le couvercle principal 20 et sont mobiles entre une position escamotée (représentée figure 4 et 6) et une position déployée (visible figure 3 et 7). Les moyens d'obturation 22 sont agencés pour changer automatiquement de position, et se déplacent selon une liaison glissière par rapport à la carcasse 20A. Les moyens d'obturation 22 ont ici la forme d'une bague d'étanchéité agencée en périphérie de couvercle principal 20 et sont prévus pour venir épouser ou contacter la cuve de cuisson et/ou le boîtier 10 dans certaines circonstances, comme par exemple lors du mode de cuisson par convection. On peut noter que la bague d'étanchéité agencée en périphérie s'étend sur 360°.

La figure 3 représente une vue en coupe de l'appareil de préparation culinaire au niveau d'une des liaisons glissière des moyens d'obturation 22. Pour permettre une cuisson nécessitant la génération et la circulation d'un flux gazeux chaud, par exemple pour un mode de cuisson vapeur ou par convection, des moyens de chauffage 24A et des moyens de ventilation 24B sont agencés directement en regard de la cuve de cuisson 12 et des aliments à cuire.

Les moyens d'obturation 22 sont dans leur position déployée, obturant un passage de ce flux gazeux chaud vers l'extérieur, particulièrement vers les poignées 30, et/ou vers une zone interne du couvercle principal 20 où se situent des organes de commande sensibles aux fuites éventuelles de vapeur, comme par exemple une carte électronique ou un moteur d'entraînement des moyens de ventilation.

Dans la configuration de la figure 3, c'est-à-dire avec lors du mode de cuisson par convection, les flux gazeux sont orientés vers l'évent 21 (représenté figure 1) pour sortir de l'espace de cuisson et il n'y a pas de passage de gaz chaud entre le couvercle principal 20 d'une part et la cuve de cuisson 12 ou le boîtier 10 d'autre part. La température des poignées pendant ou peu après la cuisson ne présente ainsi pas de risque de brûlure pour l'utilisateur. Dans ce mode de réalisation préféré, les moyens d'obturation 22 se déplacent de leur position escamotée à leur position déployée grâce au poids propre des moyens d'obturation 22. Des moyens de guidage, sous la forme d'un palier lisse 22B, assurent le guidage des moyens d'obturation 22 pour former la liaison glissière précédemment évoquée. Un léger espace entre les moyens d'obturation 22 et la cuve de cuisson 12 est visible figure 3 mais on peut prévoir un contact sous l'effet du poids des moyens d'obturation.

Fig. 4 représente une vue en coupe de l'appareil de préparation culinaire au niveau d'une des liaisons glissière des moyens d'obturation 22. Les moyens d'obturation 22 sont dans leur position escamotée. Un couvercle intérieur 23 est accouplé au couvercle principal 20 et agencé entre les moyens d'obturation 22 d'un côté et la cuve de cuisson 12 d'un autre côté, de telle sorte que le couvercle intérieur 23 puisse s'ajuster sur le bord de la cuve de cuisson 12 afin d'en prendre la forme, et assurer une étanchéité d'un espace de cuisson délimité par le couvercle intérieur 23 et la cuve de cuisson 12 lorsqu'elle est fermée par le couvercle principal 20. Cette mise en oeuvre assure une montée de la pression suffisante dans la cuve de cuisson 12 lorsque la température augmente pour effectuer une cuisson sous pression.

Lors du montage du couvercle intérieur 23 sur le couvercle principal 20, on comprend que les moyens d'obturation 22 sont poussés dans cette position escamotée et se logent dans un renfoncement de la carcasse 20A assez profond pour qu'une extrémité des moyens d'obturation 22 ne dépasse pas du renfoncement et ne gêne pas l'installation du couvercle intérieur 23 ou l'étanchéité de l'espace de cuisson.

Le couvercle intérieur 23 est amovible et prévu pour être manipulé par un utilisateur, et sa présence ou son absence correspond à une position différente des moyens d'obturation 22. Le couvercle intérieur 23 est ensuite attaché temporairement pendant la cuisson sous pression, et retient les moyens d'obturation 22 dans leur position escamotée.

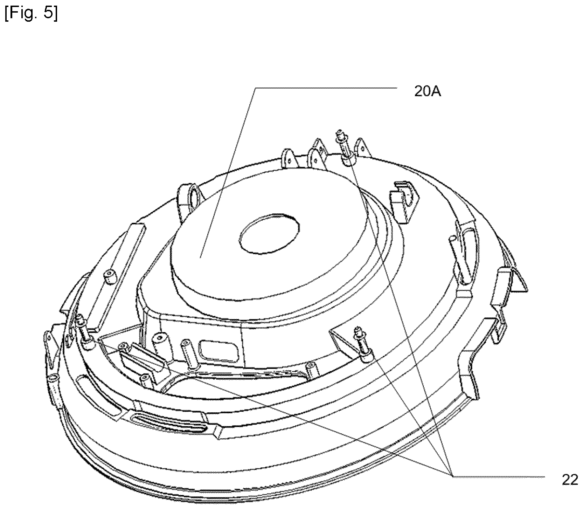

La figure 5 représente la carcasse 20A du couvercle principal 20, vue de dessus, et formant une structure interne au couvercle principal 20. Le couvercle principal 22 est dans la même configuration que celle de la figure 4, et les moyens d'obturation 22 sont dans leur position escamotée. Des tiges de moyens d'obturation 22 ont été poussées et dépassent (dans cette position escamotée) de la surface supérieure de la carcasse 20A, permettant de libérer de l'espace sous la carcasse 20A pour le couvercle intérieur 23.

La figure 6 représente une vue d'une mise en oeuvre selon une première alternative, selon le même plan que la figure 4 avec les moyens d'obturation 22 en position escamotée, l'appareil de préparation culinaire comprenant des moyens de rappel élastiques 22A alternatifs au rappel par gravité. En effet, des moyens de rappel élastique 22A alternatifs rendent le passage des moyens d'obturation 22 de leur position escamotée à leur position déployée automatique, tels que des ressorts (représentés figure 6 et 7).

La figure 7 représente la coupe de la figure 6 avec les moyens d'obturation dans leur position déployée.

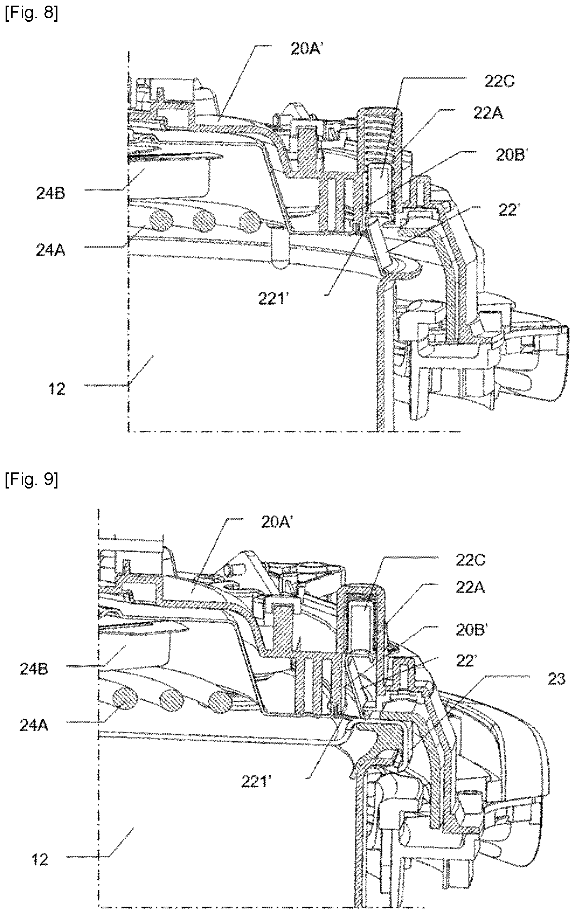

La figure 8 représente une vue en coupe d'un appareil de préparation culinaire comprenant une mise en oeuvre alternative des moyens d'obturation de la figure 3 ou 4. Dans cette mise en oeuvre alternative de la figure 8, les moyens d'obturation 22' sont formés par une bague d'étanchéité tronconique. La bague d'étanchéité tronconique peut être formée par une tôle recourbée à ses deux extrémités comme le montre la figure 8.

La bague d'étanchéité tronconique est montée coulissante sur une paroi interne cylindrique 20B' de la carcasse 20A' du couvercle, et un ensemble de rappel comprenant des moyens de rappel 22A (des ressorts de compression) et des pions 22C pousse la bague d'étanchéité tronconique en appui sur la cuve de cuisson 12, en particulier sur son rebord supérieur, au niveau de rayon de jonction avec la paroi latérale de la cuve de cuisson 12.

Un joint secondaire 221' peut être prévu entre la carcasse 20A' et la bague d'étanchéité tronconique pour parfaire l'étanchéité aux gaz chauds ou vapeurs de cuisson. Avec un tel joint secondaire 221', la structure interne du couvercle 20 est préservée d'une exposition aux gaz chauds ou vapeurs de cuisson ce qui améliore la durabilité de l'appareil de préparation culinaire. Un tel joint secondaire peut aussi être prévu dans la mise en oeuvre des figures 3, 4, 6 ou 7.

Ainsi dans cette configuration de la figure 8, un mode de cuisson par convection et/ou rayonnement direct est possible, avec la participation des moyens de chauffage 24A et/ou des moyens de ventilation 24B supportés par la carcasse 20A' du couvercle 20. En position déployée, la bague tronconique d'étanchéité limite le passage des gaz chauds entre le boîtier et le couvercle.

La figure 9 montre la bague d'étanchéité tronconique en position escamotée, en raison de l'installation d'un couvercle intérieur 23 accouplé au couvercle principal 20 et agencé entre les moyens d'obturation 22' d'un côté et la cuve de cuisson 12 d'un autre côté. Ainsi, un mode de cuisson sous pression est possible. Lors du montage du couvercle intérieur, la bague d'étanchéité tronconique est repoussée contre la carcasse 20A' pour aller occuper la position escamotée de la figure 9, ce qui a pour effet de repousser les pions 22C et de comprimer les moyens de rappel 22A.

On peut noter que lors du démontage ultérieur du couvercle intérieur 23, l'effort des moyens de rappel 22A exercé sur la bague d'étanchéité tronconique (et donc sur le couvercle intérieur 23) facilite l'extraction du couvercle intérieur 23.

### Application industrielle

Un appareil de préparation culinaire selon la présente invention, et sa fabrication, sont susceptibles d'application industrielle.

On comprendra que diverses modifications et/ou améliorations évidentes pour l'homme du métier peuvent être apportées aux différents modes de réalisation de l'invention décrits dans la présente description sans sortir du cadre de l'invention.

En particulier, on peut noter que les moyens d'obturation peuvent être un simple écran, c'est-à-dire une paroi mobile dans le couvercle principal. Les moyens d'obturation peuvent être amovibles et/ou démontables sans outils pour permettre un nettoyage. Les moyens d'obturation peuvent être en plusieurs parties indépendantes, interconnectées ou reliées entre elles de manière temporaire. On peut prévoir tout type de mouvement au lieu du mouvement en translation décrit : pivotement, basculement, avec un levier... On peut noter qu'il peut y avoir une pluralité de moyens de rappel de moyens d'obturation, et une pluralité de combinaisons de ces moyens de rappel pour rappeler les moyens d'obturation.

En alternative à des moyens d'obturation mobiles par rapport au reste du couvercle, on peut aussi prévoir des moyens d'obturation qui consistent à faire descendre l'ensemble des éléments du couvercle pour générer une étanchéité sur la cuve de cuisson. Autrement dit, une fois le couvercle intérieur retiré, les moyens d'obturation (le reste du couvercle principal) descendent pour entrer en contact avec la cuve de cuisson (son rebord supérieur par exemple) pour faire écran aux gaz chauds et limiter voire empêcher leur passage entre le couvercle principal et le boîtier.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Appareil de préparation culinaire comprenant au moins :
- un boîtier (10), comprenant un logement recevant une cuve de cuisson (12) et définissant un espace de cuisson,
- un couvercle principal (20), mobile entre une position ouverte permettant l'accès à l'espace de cuisson et une position fermée interdisant l'accès à l'espace de cuisson,
- un couvercle intérieur (23), amovible et agencé pour être accouplé avec le couvercle principal (20) de sorte à venir en appui de manière étanche sur un bord du boîtier (10) et/ou de la cuve de cuisson (12) lorsque le couvercle principal (20) est en position fermée,
l'appareil de préparation culinaire étant agencé pour proposer au moins un premier mode de cuisson dans lequel le couvercle intérieur (23) est accouplé au couvercle principal (20), et au moins un deuxième mode de cuisson dans lequel le couvercle intérieur (23) est retiré du couvercle principal (20),
**caractérisé en ce que** l'appareil de préparation culinaire comprend des moyens d'obturation (22), mobiles entre :
- une position escamotée, occupée lors du premier mode de cuisson, pour permettre le montage du couvercle intérieur (23),
- une position déployée, occupée lors du deuxième mode de cuisson et dans laquelle les moyens d'obturation (22) sont agencés pour obturer au moins partiellement un passage entre l'espace de cuisson et l'extérieur de l'appareil de préparation culinaire, laissé libre par le couvercle intérieur (23) retiré du couvercle principal (20).

2. Appareil de préparation culinaire selon la revendication 1, dans lequel le passage est agencé entre le couvercle principal (20) d'une part, et le boîtier (10) et/ou la cuve de cuisson (12) d'autre part.

3. Appareil de préparation culinaire selon l'une des revendications 1 ou 2, dans lequel le couvercle principal (20) comprend des moyens de ventilation (24B) et des moyens de chauffage (24A), et dans lequel le deuxième mode de cuisson comprend au moins une étape de cuisson par convection.

4. Appareil de préparation culinaire selon l'une des revendication 1 à 3, comprenant au moins un évent (21) agencé pour évacuer un flux gazeux généré dans l'espace de cuisson lors du deuxième mode de cuisson.

5. Appareil de préparation culinaire selon la revendication 4, dans lequel l'au moins un évent (21) est agencé sur le couvercle principal (20) et est rendu inopérant par le couvercle intérieur (23) dans le premier mode de cuisson.

6. Appareil de préparation culinaire selon l'une des revendication 1 à 5, dans lequel le premier mode de cuisson comprend au moins une étape de cuisson sous pression.

7. Appareil de préparation culinaire selon l'une des revendication 1 à 6, comprenant des moyens de rappel automatique par gravité agencés pour déplacer les moyens d'obturation (22) par gravité au moins de la position escamotée à la position déployée.

8. Appareil de préparation culinaire selon l'une des revendication 1 à 6, comprenant des moyens de rappel élastique (22A) agencés pour déplacer les moyens d'obturation (22) au moins de la position escamotée à la position déployée.

9. Appareil de préparation culinaire selon l'une des revendication 1 à 8, comprenant des moyens de rappel manuel agencés pour permettre à un utilisateur de déplacer les moyens d'obturation (22).

10. Appareil de préparation culinaire selon l'une des revendication 1 à 9, dans lequel les moyens d'obturation (22) comprennent une bague d'étanchéité.

11. Appareil de préparation culinaire selon la revendication 10, dans lequel la bague d'étanchéité comprend un joint déformable.

12. Appareil de préparation culinaire selon l'une des revendication 10 ou 11, dans lequel la bague d'étanchéité est agencée pour épouser le boîtier (10) et/ou la cuve de cuisson (12).

13. Appareil de préparation culinaire selon l'une des revendication 1 à 12, dans lequel les moyens d'obturation (22) comprennent des moyens de guidage sur le couvercle principal (20).

14. Appareil de préparation culinaire selon la revendication 13, dans lequel les moyens de guidage comprennent une pluralité de glissières, de préférence trois glissières.

15. Appareil de préparation culinaire selon l'une des revendication 1 à 14, comprenant des moyens de détection de la position déployée des moyens d'obturation (22), pour autoriser le deuxième mode de cuisson.
